# EUROPEAN PATENT SPECIFICATION

(11) **EP 4 190 652 B1**
(45) Date of publication and mention of the grant of the patent: **05.06.2024**
(21) Application number: 22207751.3
(22) Date of filing: 16.11.2022
(51) Int. Cl.: B60T 17/00, B01D 53/00

(54) **CHECK VALVE WITH INTEGRATED VENTING ELEMENT**
RÜCKSCHLAGVENTIL MIT INTEGRIERTEM ENTLÜFTUNGSELEMENT
CLAPET ANTI-RETOUR AVEC ÉLÉMENT DE VENTILATION INTÉGRÉ

(30) Priority: 16.11.2021 EP 21208380
(43) Date of publication of application: 07.06.2023
(73) Proprietor: ZF CV Systems Global GmbH, 3006 Bern (CH)
(72) Inventor: COUPPEE, Ulrich, 31863 Coppenbrügge (DE); KORTLANG, Tobias, 30989 Gehrden (DE); RIEDIGER-JANISCH, Karl-Heinz, 30455 Hannover (DE); SMARDZ, Marek, 67-400 Wschowa (PL)
(74) Representative: Ohlendorf, Henrike

(56) References cited:
- EP-A1- 3 650 106
- EP-A1- 3 650 107
- JP-A- S6 022 555

## Description

The invention relates to a pneumatic device for a brake system. The pneumatic device may be a pneumatic brake system for vehicles, a relay valve or a brake valve arrangement. The invention further relates to a commercial vehicle comprising such a pneumatic device and to a method for assembling a pneumatic device.

Pneumatic devices of the type described above contain electric or electronic components. If the pneumatic devices are mounted outside of a protected environment of a vehicle, they may be exposed to foreign media like water from the environment, for example, during cleaning, operation in or after rain, flooding, or deliberate fording of bodies of water.

Pneumatic devices typically have pneumatic connections to the environment of the pneumatic device, for example, to exhaust excess pressure from a pressurized section of the pneumatic device, or to equalize pressure with the environment of the pneumatic device. However, such a pneumatic connection to the environment of the pneumatic device may allow foreign media located in the environment to enter the pneumatic device. In particular, the ingress of liquids, such as water can impair the functionality of the pneumatic device. In the case of pneumatic brake systems, for example, ingress of water can lead to corrosion, short circuits, interruptions or to complete failure of the brake system as a result of water freezing. Measures must therefore be taken to make the unintentional ingress of foreign media more difficult or, at best, prevent it.

In the prior art, pneumatic devices are known that are designed to prevent unintentional ingress of small amounts of spray water or water below a certain level. Among others, GB 2 401 330 A, DE 10 2016 011 032 A1, EP 36 50 107A1 and DE 28 29 290 A1 disclose such pneumatic devices. In the prior art are further systems for vehicles are known enabling exhausting and draining fluid to an ambience.

EP 3 650 107 A1 and EP 3 650 106 A1 disclose purge gas contaminate elimination systems for vehicles which allow separating fluids, in particular compressed air coming from a compressor or an air treatment unit, and exhausting the separated component to an ambience. JPS6022555A relates to an air dryer device for vehicles provided with a drain valve at the bottom of the device to drain condensed moisture.

To enable safe operation of a pneumatic device at the outset even in environments in which large quantities of a foreign medium, in particular water, are present, the priority application No. EP 21208380.2 of this invention suggests an element associated to the pneumatic connection which is configured to provide a liquid impermeable but gas permeable barrier between a housing for receiving electronic components and the environment. The element therefore prevents ingress of liquids, but still remains permeable for gases. Hence, the housing is protected against ingress of water but still is breathable. Furthermore, it is ensured that a reference pressure corresponding to the pressure of the environment for e.g. a pressure sensor arranged in the housing may be provided.

In this context, a liquid refers to a nearly incompressible fluid that conforms to the shape of its container but retains a nearly constant volume independent of pressure, wherein the volume is definite if the temperature and pressure are constant. A gas refers to a compressible fluid. It will be understood that the described liquid state and gas state refer to the states of matter of the mediums, which occur during operation of the pneumatic device under the environmental conditions.

However, such an element only allows breathing and/or exhausting the pneumatic device with low volume flow and in cases where leakages may appear and need to be exhausted to the environment the proposed element may be overcharged. Especially electro-pneumatic components, which are located in an electrical control chamber in the housing of the pneumatic device, have risk to get leakages which could blow up the electrical control chamber.

The object of the present invention therefore is providing a pneumatic device, wherein the electric or electronic components are protected against ingress of foreign medium, and wherein leakages are covered.

The problem is solved by a pneumatic device for a brake system, comprising a housing for receiving electronic components and configured for being in fluid communication with the environment during operation of the pneumatic device, a breathing path having a port and being in fluid connection with the housing and the environment, a breathing element arranged in the breathing path and configured to provide a liquid impermeable but gas permeable barrier between the housing and the environment, and a valve element. The valve element is configured to bypass the breathing element for exhausting the pneumatic device to the environment.

Firstly, the solution ensures that the housing for receiving electronic or electric components is securely protected against undesired ingress of liquids. Secondly, the pneumatic device may be exhausted during operation with a higher volume flow, because fluid does not necessarily have to pass the breathing element but may bypass the breathing element in a flow direction from the inside to the outside. Hence, an additional exhaust possibility is provided. Thirdly, since the breathing element allows transfer of gas between the environment and the housing, breathing of the pneumatic device in case of underpressure is enabled. Moreover, since backpressure is avoided, a reference pressure corresponding to the pressure of the environment for e.g. a pressure sensor arranged in the housing may be provided.

In the context of the invention, the environmental conditions include pressure in the range between approximately 0 to 1 bar and a temperature range above -40 °C up to 100 °C. The internal or operating pressure within the pneumatic device defines a pressure difference compared to the environmental pressure. The internal pressure may be up to 13 bar occurring in parts of the pneumatic device which are not pressure sensitive.

The breathing path can be referred to as exhaust path in certain embodiments. The port may be referred to as exhaust port, breathing port or exhaust and breathing port. The breathing path is preferably in connection with the housing for exhaust and/or breath the pneumatic device to the environment via the port. The breathing element may be referred to as exhaust element. It is preferred that the breathing element is associated to the breathing path instead of being arranged in the breathing path.

Preferably, the valve element is a one-way valve. Particularly preferred, the valve element comprises at least one flapper allowing passage of fluid from in-side the housing towards the environment for bypassing the breathing element.

However, the valve element may also be any other one-way valve allowing passage of fluid from inside the housing towards the environment to bypass the breathing element, for example a ball valve. It is also possible to provide more than one valve element to bypass the breathing element.

In a preferred embodiment, the flapper is at least partially movable between an open position, to thereby allowing fluid to bypass the breathing element, and a closed position, to thereby preventing fluid to bypass the breathing element. Preferably, the flapper pivots open when the fluid pressure differential exceeds a predetermined pressure threshold. If there is a negative pressure differential, the flapper closes and thus prevents flow reversal.

Preferably, the flapper is a lip circumferential to a valve body of the valve element, wherein the lip seals, in the closed position, against an inner circumferential surface of the housing. Preferably, the housing has a multi-part design and comprises, for example, an upper housing portion, a middle housing portion and/or a lower housing portion. It is preferred that the valve element comprises a valve body. The valve body is preferably made of a polymer, particularly preferred of an elastomer. The valve body preferably forms an interface to other parts of the pneumatic device. The flapper is preferably made of a rubber. The flapper may be a separate part to the valve body, which is, for example, glued or welded to the valve body, or may be an integral part of the valve body. If the flapper and the valve body are integral parts, they may be, for example, manufactured using multi-component injection molding or may be made from the same material in one step.

In a preferred embodiment, the valve element is configured to carry the breathing element. It is therefore preferred that the valve body has a receiving section for receiving and hence carrying the breathing element. Preferably, a fastener is provided for fastening the breathing element at the receiving section. The fastener is preferably formed from a polymer. Further preferred, the breathing element is glued or welded on a suitable fastening surface of the fastener. Preferably, the valve body comprises an engagement section, wherein the fastener engages with the engagement section. Thus, the breathing element and the valve element can be easily pre-assembled, in order to simplify the mounting of the pneumatic device.

Preferably, the valve element comprises a passthrough through which the breathing path at least partly passes. Hence, it is possible that only a branch of the breathing path passes through the passthrough of the valve element. In a preferred embodiment, the breathing element intersects the breathing path, which passes through the passthrough. In other words, the breathing element is arranged in the breathing path which passes through the passthrough and thereby provides a liquid impermeably but gas permeably barrier.

In a preferred embodiment, the breathing element is arranged in the passthrough of the valve element. Part of the volume flow, which passes through the breathing path, therefore passes through the passthrough and thereby through the breathing element. The breathing element allows, as mentioned above, only a low volume flow to pass. However, a higher volume flow, may bypass the breathing element. Since the flapper allows, in the open position, passage of fluid to thereby bypassing the breathing element, an additional exhaust possibility is provided. With arranging the breathing element in the passthrough a compact and space optimized component is provided.

Preferably, the valve element comprises at a first axial face at least one slot being in fluid communication with a bypass allowing fluid to bypass the breathing element and the breathing path for exhausting the pneumatic device via the port. Hence, the gas which passes through the breathing element and the liquid which bypasses the breathing element are reunited and exit the breathing path via the port.

In a preferred embodiment, the valve element is clamped between a support member and a cover plate. Thus, the valve element is guided by the support member and the cover plate. Preferably, the cover plate abuts the first axial face of the valve, wherein the cover plate comprises at least on gap which at least partly overlaps with the at least one slot of the valve element. Thus, the cover plate ensures the fluid communication between the bypass and the breathing element for exhausting the pneumatic device via the port. Further preferred, the support member abuts a second axial face opposite the first axial face. Therefore, the valve element is guided on opposite axial faces.

Preferably, the breathing element is a liquid impermeable but gas permeable membrane. A membrane is a space-saving breathing element that can be easily integrated in the pneumatic device.

In a preferred embodiment, the pneumatic device is a pneumatic brake system, a brake valve arrangement or a relay valve. Brake systems are often installed at least partly in the vehicle frame, which is exposed during service life to wet weather conditions, splash water and high-pressure water beam during cleaning e.g., before service actions. At the same time, housings for receiving electric or electronic components do often contain a pressure sensor, which needs to have the environmental pressure as a reference for measuring the brake pressure of such a brake system. This requires the breathing of the sensor to the environment. By having the breathing element according to the invention, water ingress is securely avoided.

In a second aspect, the invention relates to a brake system comprising a pneumatic device according to the first aspect of the invention. By having such a pneumatic device, the preferred embodiments and benefits of the pneumatic device according to the first aspect are at the same time preferred embodiments and benefits of the brake system according to the second aspect. Thus, reference is made to the above description of the pneumatic device according to the first aspect of the invention, in particular to the dependent claims.

Preferably, the pneumatic device of the brake system is a brake valve arrangement of the brake system.

In a third aspect, the invention relates to a commercial vehicle comprising a brake system according to the second aspect. It should be understood, that by having a brake system according to the second aspect, the aspects and benefits of the brake system are at the same time preferred embodiments and benefits of the commercial vehicle according to the third aspect of the invention, in particular as they are described in the dependent claims. Thus, reference is made to the above description of the pneumatic device according to the first aspect and the brake system having such a pneumatic device according to the second aspect of the invention.

According to a fourth aspect of the invention, the above stated problem is solved by a method for assembling a pneumatic device, preferably a pneumatic device according to the first aspect, the method comprising the steps: providing a housing for receiving electric or electronic components, providing a breathing path for fluid connection between the housing and the environment, providing a breathing element configured to provide a liquid impermeable but gas permeable barrier, providing a valve element, arranging the breathing element in the breathing path, and arranging the valve element at a position associated with the breathing path, such that the valve element allows fluid to bypass the breathing element.

To further simplify the mounting of the pneumatic device the breathing element and the valve element may be pre-assembled. The method therefore further comprising the steps: pre-assembling the breathing element and the valve element, such that the breathing element is arranged in a passthrough of the valve element, arranging the pre-assembled valve element and breathing element at a position associated with the breathing path, such that the breathing path passes through the passthrough of the valve element.

It should be understood, that the method incorporating the arrangement of the breathing element in the pneumatic device according to the first aspect has similar or equal aspects as the first aspect of the invention, in particular as they are described in the dependent claims. Thus, reference is made to the above description of the pneumatic device according to the first aspect of the invention.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth. In the accompanying drawings:
- Fig. 1: shows a schematic layout of a vehicle having a brake system comprising a pneumatic device according to the invention;
- Fig. 2: shows a schematic layout of a pneumatic device according to the invention;
- Fig. 3: shows a sectional view of the pneumatic device according to a first preferred embodiment; and
- Fig. 4: shows a sectional view of a close-up of the valve element carrying the breathing element.

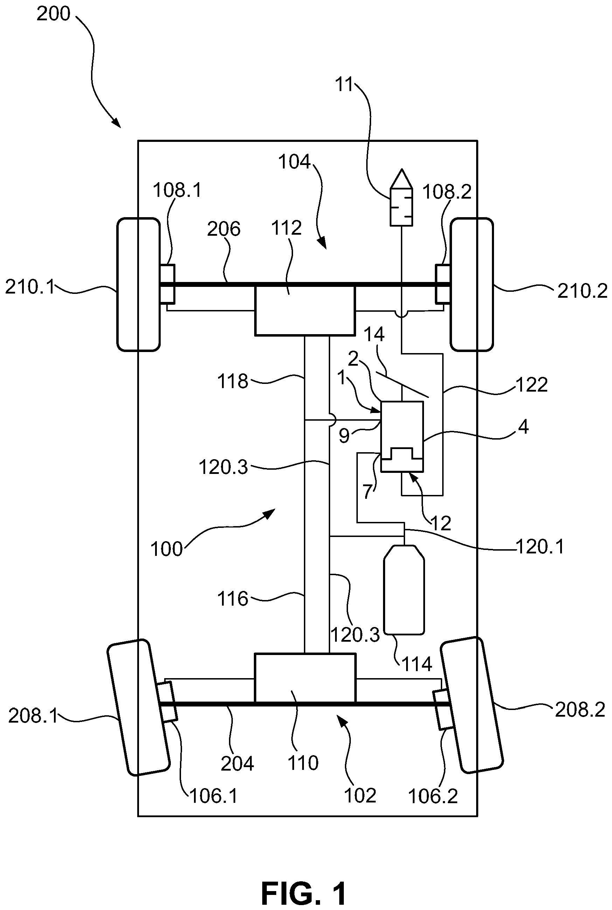

A vehicle 200, as shown in Fig. 1, in particular a commercial vehicle, comprises a front axle 204 and a rear axle 206. For braking front wheels 208.1, 208.2 of the front axle 204 and rear wheels 210.1, 210.2 of the rear axle 206 the vehicle 200 may comprise a brake system 100 having a front axle brake circuit 102 for braking the front wheels 208.1, 208.2 and a rear axle brake circuit 104 for braking the rear wheels 210.1, 210.2. For braking the wheels 208.1, 208.2, 210.1, 210.2, the brake system 100 comprises front axle brake actuators 106.1, 106.2 and rear axle brake actuators 108.1, 108.2. The front axle brake actuators 106.1, 106.2 are connected to a front axle brake modulator 110 while the rear axle brake actuators 108.1, 108.2 are connected to a rear axle brake modulator 112. For providing compressed air at a supply pressure, the brake system 100 comprises a compressed air supply 114. Of course, it may comprise more than one air supply.

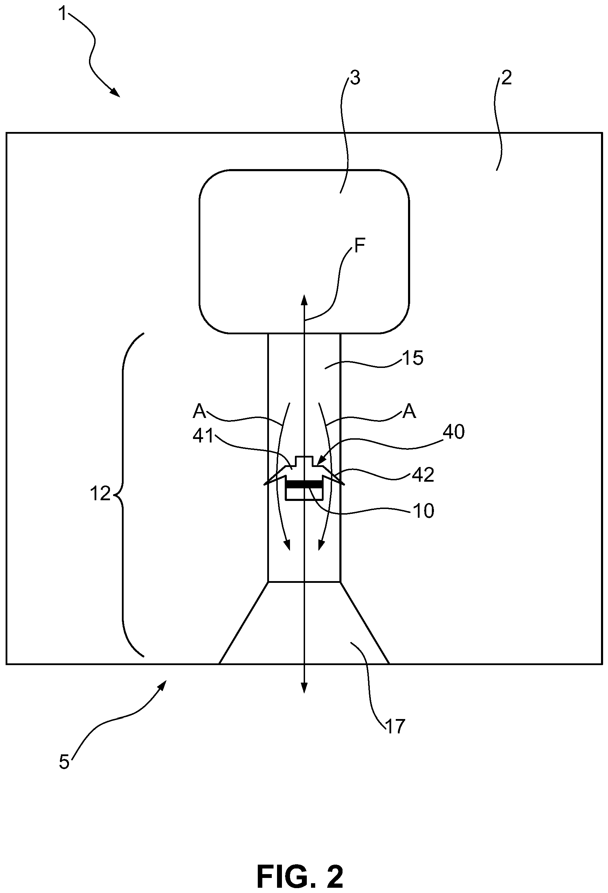

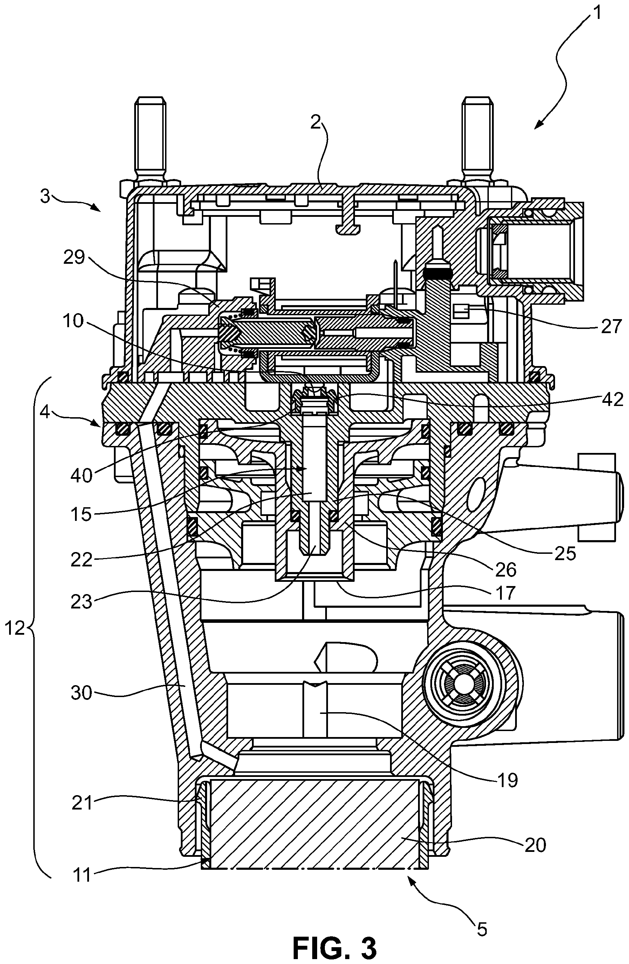

In order to brake the vehicle 200 a brake pressure needs to be supplied to the front axle brake modulator 110 and the rear axle brake modulator 112. For providing the brake pressure, the brake system 100 comprises the pneumatic device 1 (see Fig. 2 and 3). In the embodiment shown in Fig. 1, the pneumatic device 1 is a brake valve arrangement.

The brake valve arrangement 1 comprises a housing 2 with a lower housing portion 4 having a supply connection 7, a working connection 9, and an exhaust and breathing portion 12. The exhaust and breathing portion 12 comprises a breathing path 15 (see Fig. 2 to 4). The supply connection 7 is connected to the compressed air supply 114 via supply line 120.1 for receiving pressurized air at the supply pressure. The brake valve arrangement 1 could also be a combination of single components as needed or wished for the safe vehicle operation.

Upon actuation by a user or an electronic control unit such as a unit for autonomous driving, the brake valve arrangement 1 provides a brake pressure corresponding to the degree of actuation provided by the user or a respective signal. To allow an actuation, the brake valve arrangement 1 comprises an actuation element 14, which is formed as a brake pedal in this embodiment. The brake valve arrangement 1 is configured to modulate the brake pressure supplied to the working connection 9 dependent on a degree of actuation of the actuation element 14. If the brake pedal 14 is only slightly actuated, a low brake pressure is supplied to the working connection 9 while a high brake pressure is supplied to the working connection 9 when the brake pedal 14 is fully actuated.

The brake valve arrangement 1 is connected to the front axle brake modulator 110 and the rear axle brake modulator 114 via connecting lines 116, 118. In this embodiment the brake valve arrangement 1 is formed as a single circuit brake valve arrangement 1 having only one working connection 9 for providing brake pressure. Both, the front axle connecting line 116 connecting the brake valve arrangement 1 to the front axle brake modulator 110 as well as the rear axle connecting line 118 connecting the brake valve arrangement 1 to the rear axle brake modulator 112 are connected to the same working connection 9 of the brake valve arrangement 1. In other embodiments, the brake valve arrangement 1 also could be formed as a multi circuit brake valve arrangement 1 having multiple working connections 9 for providing the same and/or different brake pressures to the brake circuits 102, 104.

The brake modulators 110, 112 receive the brake pressure provided by the brake valve arrangement 1 and provide pressurized air at the same brake pressure but at a higher volume to the respective brake actuators 106.1, 106.2, 108.1, 108.2. Therefore, the brake modulators 110, 112 are also connected to the compressed air supply via supply lines 120.2, 120.3. It shall be noted that the front axle brake modulator 110 and/or the rear axle brake modulator 112 may also be configured to further modify the brake pressure. For example, the front axle brake modulator 110 could comprise ABS-modules (not shown) for providing an ABS-function. Moreover, the brake actuators 106.1, 106.2, 108.1, 108.2 may also be directly connected to the brake valve arrangement 1.

For releasing the brake of the vehicle 200 the break pressure needs to be released from the brake actuators 106.1, 106.2, 108.1 108.2. The brake valve arrangement 1 is therefore configured to exhaust and breath the brake actuators 106.1, 106.2, 108.1 108.2 by connecting the working connection 9 to the exhaust and breathing portion 12. In order to exhaust pressurized air, the air needs to be released to the environment through an opening. Such an opening, however, allows water to enter the brake system 100. Brake valve arrangements, in particular brake valve arrangements having a brake pedal, are is usually located in a low position of the vehicle 200. A maximum fording depth of the vehicle 200 is thereby limited, since water could ingress in the brake system 100 via the exhaust and breathing portion 12 when the vehicle 200 drives through water and the water level reaches to the exhaust and breathing portion 12. In regular vehicles, the available maximum fording depth is sufficient and standard brake valve arrangements assemblies can be used. If however, increased fording depths are needed, special measures need to be taken. Therefore, fording versions of brake valve arrangements and/or brake valve arrangement assemblies are provided.

In Fig. 1, the brake valve arrangement 1 has a housing 2 for electric or electronic components, which is connected to a damping chamber 11. The damping chamber 11 may be provided by an exhaust silencer. For releasing the brakes of the vehicle 200, the brake pressure is released from the brake actuators 106.1, 106.2, 108.1 108.2 via the connecting lines 116, 118, the brake valve arrangement 1, the housing 2, the exhaust line 122, and the remote exhaust silencer 11.

As shown in a schematic view according to Fig. 2, a pneumatic device 1 according to a first embodiment of the invention provides an upper housing portion 3 for housing electric or electronic components that is preferably received in housing 2. The upper housing portion 3 is in fluid connection with the environment 5.

The pneumatic device 1 further has an exhaust and breathing portion 12, which comprises at least partly a breathing path 15, which is configured to connect the upper housing portion 3 to the environment 5 via a port 17.

The pneumatic device 1 further has a breathing element 10 that is associated with the breathing path 15, preferably arranged in the breathing path 15 or intersecting the breathing path 15. The breathing element 10 is configured to provide a gas permeable but liquid impermeable barrier between the environment 5 and the upper housing portion 3. By arranging the breathing element 10 at a position associated to the breathing path 15, the upper housing portion 3 is protected against dirt, chemicals and other interfering substances from the environment 5.

The gas permeable breathing element 10 allows the exhaust of the upper housing portion 3 via the breathing path 15 and the port 17 with a low volume flow and at the same time allows breathing of the upper housing portion 3, because the breathing element 10 also allows passage of gas from the environment 5 to the upper housing portion 3. Additionally, the breathing element 10 allows a gas permeable connection to the environment 5 for any sensors arranged within the upper housing portion 3. Moreover, the liquid impermeable barrier provided by the breathing element 10 securely avoids a water ingress into the breathing path 15 and into the upper housing portion 3, which may result in damaging the electronic components within the upper housing portion 3.

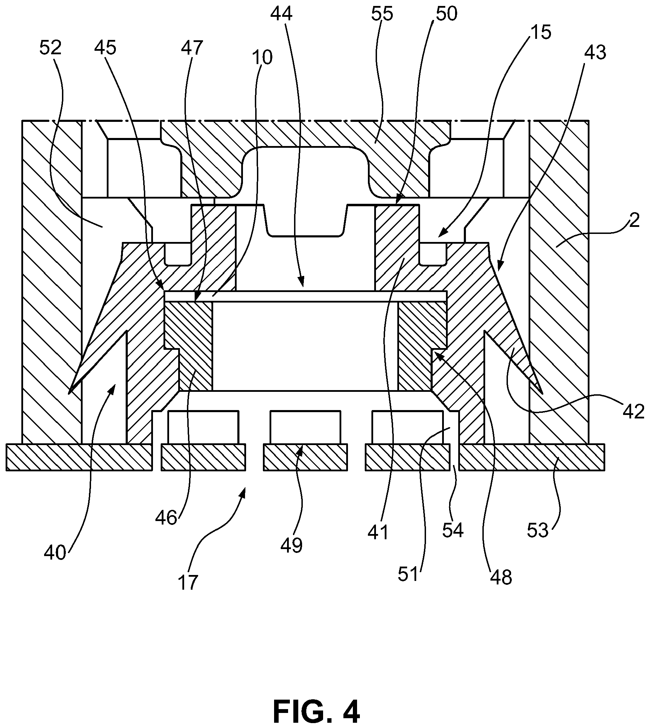

As shown in Fig. 2, the pneumatic device 1 further comprises a valve element 40. The valve element 40 is associated with the breathing path 15, preferably forms a portion of the breathing path 15. The shown valve element 40 is a one-way valve only allowing passage of fluid from the upper housing portion 3 towards the environment 5. The valve element 40 comprises a flapper 42. According to Fig. 2, the flapper 42 is a lip, which is circumferential to a valve body 41. The lip 42 is at least partially movable between an open position and a closed position, wherein Fig. 2 shows the closed position. In the closed position the valve element 40 prevents fluid to bypass the breathing element 10, wherein in the open position the valve element 40 allows fluid to bypass the breathing element 10. The lip 42 comprises a lip edge 43 sloping in the direction of the port 17 (cf. Fig. 4).

The valve element 40 carries the breathing element 10. The valve element 40 has a passthrough 44, in which the breathing element 10 is arranged (cf. Fig. 4). The breathing element 10 completely intersects the breathing path 15, which passes through the passthrough 44 of the valve element 40. Gas flowing through the breathing path 15 therefore may flow through the passtrough 44 of the valve element 40 and consequently through the breathing element 10.

As demonstrated by the flow path F, the breathing element 10 allows gas to pass from the upper housing portion 3 towards the environment 5 and from the environment 5 towards the upper housing portion 3. Hence, the breathing element 10 allows breathing and exhausting of the upper housing portion 3. However, the breathing element 10 only allows breathing and exhausting the pneumatic device 1 with a low volume flow, due to the fluid-sealing properties of the breathing element 10. As demonstrated by the additional flow paths A, fluid may also bypass the breathing element 10. The flapper 42, however, prevents flow reversal and only allows fluid to pass from the upper housing portion 3 towards the environment 5. Hence, an additional exhaust possibility for exhausting the upper housing portion 3 to the environment 5 with a higher volume flow is provided. Moreover, since the valve element 40 blocks flow reversal, the valve element 40 prevents fluid ingress, for example water ingress, into the breathing path 15 and into the upper housing portion 3.

According to the embodiment disclosed in Fig. 3, the pneumatic device 1 is a brake valve arrangement. The brake valve arrangement 1 comprises a housing 2 for receiving electric or electronic components with a lower housing portion 4. . According to the embodiment disclosed in Fig. 3 the housing 2 further comprises an upper housing portion 3, which houses the electric or electronic components, and which is in fluid connection with the environment 5.

The brake valve arrangement 1 has an exhaust and breathing portion 12, which comprises a breathing path 15 configured to provide a fluid connection between the upper housing portion 3 and the environment 5 via a port 17.

The brake valve arrangement 1 further comprises a valve element 40, which forms a portion of the breathing path 15. The valve element 40 carries a breathing element 10 providing a gas permeable, but fluid impermeable membrane between the upper housing portion 3 and the environment 5. The flapper 42 of the valve element allows passage of fluid form inside the upper housing portion 3 towards the environment 5. Hence, the valve element provides an additional exhaust possibility. Both, the gas which passes thorough the breathing element 10 and the fluid which bypasses the breathing element 10 exit the breathing path 15 via the port 17.

The brake valve arrangement 1 further has a damping chamber 11, wherein a flow path 19 is provided configured to connect the breathing path 15 to the environment 5 via the damping chamber 11. In the shown embodiment, the damping chamber 11 is a silencer that comprises a fixing bracket 21 that engages lower housing portion 4 and holds a sound damping material 20 in place. The flow path 19 at least partly extends through the silencer 11. Thus, pressurized air flowing through the breathing path 15 will be guided by the flow path 19 directly into the sound damping material 20. Thus, excessive noise is prevented.

The brake valve arrangement 1 further comprises a relay piston 26 having a housing cover 25, which is arranged in the breathing path 15. The relay housing cover 25 is received in the relay piston 26, which is coupled to lower housing portion 2. Preferably, the relay piston is at least partly formed of a polymer. Thus, the relay piston is light-weight. In addition, a high degree of function integration is enabled by the plurality of known technologies for manufacturing polymer parts.

The brake valve arrangement 1 further has a sensor 27 in fluid connection with the housing 2, preferably arranged in-side the upper housing portion 3 of the housing 2.

An exhaust channel 30 is provided between at least one solenoid valve 29 and the damping chamber 11. The channel 30 is configured to exhaust a pre-control volume provided by the solenoid valve 29 to move the relay piston 26, wherein the brake valve arrangement 1 has at least one solenoid valve 29 configured to selectively close the exhaust channel 30.

The breathing path 15 further has an equalizing chamber 22, which is configured to provide an equalizing volume to avoid pressure peaks acting on the breathing element 10. The breathing path 15 further has a throttle 23, which is configured to narrow the flow path defined by the breathing path 15. Such a throttle may preferably cooperate with the equalizing volume such that the throttle 23 connects the equalizing chamber 22 to the port 17. Since the throttle narrows the flow cross-section of the breathing path 15, pressure peaks and in particular, backpressure peaks are reduced. Thus, even a sensitive breathing element 10 is securely protected when arranged upstream the throttle 23. According to Fig. 3 the valve element 40 is arranged upstream the throttle 23 and the equalizing chamber 22. In the disclosed embodiment, the flapper 42 of the valve element 40 seals in the closed position against an inner circumferential surface of the housing 2.

Fig. 4 depicts a sectional view of a close-up of the valve element 40 carrying the breathing element 10. The valve element 40 forms a portion of the breathing path 15.

The valve element 40 comprises a valve body 41. The valve body 41 is preferably made of an elastomer and/or is elastically deformable. A flapper 42 preferably comprising or formed as a lip is circumferential to the valve body 41. The lip 42 comprises a lip edge 43 sloping in the direction of a port 17. The lip 42 is preferably made of an elastic material. In the disclosed embodiment, the valve body 41 and the lip 42 are integral parts.

The valve body 41 comprises a passthrough 44. The breathing element 10 is arranged in the passthrough 44. For receiving the breathing element 10 the valve body 41 comprises a receiving section 45. At the receiving section 45 the breathing element 10 completely intersects the passthrough 44. For fastening the breathing element 10 at the receiving section 45 a fastener 46 is provided. The fastener 46 is preferably cylindrical and preferably at least partially resembles the contour of the passthrough 44. The fastener 46 comprises a fastening surface 47. The breathing element 10 is coupled to the fastening surface 47, preferably glued and/or welded to the fastening surface 47. According to Fig. 4, the breathing element 10 is in such a manner coupled to the fastener 46 that the breathing element 10 forms a cover area of the fastener 46. The valve body 41 comprises an engagement section 48, wherein the fastener 46 engages with the engagement section 48. As shown in Fig. 4, the engagement section 48 is formed by a protrusion of the valve body 41, wherein the protrusion is directed radially inwards. The engagement section 48 ensures axial positioning of the fastener 46 and consequently of the breathing element 10 at the receiving section 45.

The valve body 41 comprises at a first axial face 49 at least one slot 51 being in fluid communication with a bypass 52, which allows fluid to bypass the breathing element 10, and the breathing path 15. The at least one slot 51 allows the fluid which bypasses the breathing element 10 to be exhausted via the port 17. The valve element 40 according to Fig. 4 comprises four slots 51.

The first axial face 49 abuts a cover plate 53. The cover plate 53 comprises at least one gap 54 which at least party overlaps with the at least on slot 51 of the valve element 40. The cover plate 53 shown in Fig. 4 comprises four gaps 54, which at least partly overlaps with the four slots 51 of the valve element 40. A second axial face 50 is opposite the first axial face 49. The valve element 40 is clamped between the cover plate 53 and a support member 55 to thereby axially fix the valve element 40 within the breathing path 15. Preferably, the support member 55 is made of a plastic material. It is further preferred that the support member 55 is supported by the housing 2. It shall be understood that other fixing options for fixing and/or positioning the valve element 40 in the piston and/or to the housing 2, are envisaged and easy derivable for the skilled person from the present disclosure. In particular, the valve element may be placed within another portion of the housing 2 and/or positioned by a positioning element such as a clamp, screw, pin, clip, snap-fitted into a receiving orifice or the like.

### List of reference signs (Part of the description)

- 1: pneumatic device
- 2: housing
- 3: upper housing portion
- 4: lower housing portion
- 5: environment
- 7: supply connection
- 9: working connection
- 10: breathing element
- 11: damping chamber, silencer
- 12: exhaust and breathing portion
- 14: actuation element
- 15: breathing path
- 17: port
- 19: flow path
- 20: sound damping material
- 21: bracket
- 22: equalizing chamber
- 23: throttle
- 25: housing cover
- 26: relay piston
- 27: sensor
- 29: solenoid valve
- 30: exhaust channel
- 40: valve element
- 41: valve body
- 42: flapper, lip
- 43: lip edge, flapper edge
- 44: passthrough
- 45: receiving section
- 46: fastener
- 47: fastening surface
- 48: engagement section
- 49: first axial face
- 50: second axial face
- 51: slot
- 52: bypass
- 53: cover plate
- 54: gap
- 55: support member
- 100: brake system
- 102: front axle brake circuit
- 104: rear axle brake circuit
- 106.1, 106.2: front axle brake actuators
- 108.1, 108.2: rear axle brake actuators
- 110: front axle brake modulator
- 112: rear axle brake modulator
- 114: compressed air supply
- 116: front axle connecting line
- 118: rear axle connecting line
- 120.1, 120.2, 102.3: supply lines
- 122: exhaust line
- 200: vehicle
- 204: front axle
- 206: rear axle
- 208.1, 208.2: front wheels
- 210.1, 210.2: rear wheels
- A: Additional flow path
- F: flow path

## Claims

1. A pneumatic device (1) for a brake system (100), comprising:
- a housing (2) for receiving electronic components and configured for being in fluid communication with the environment (5) during operation of the pneumatic device (1);
- a breathing path (15) having a port (17) and being in fluid connection with the housing (2) and the environment (5);
- a breathing element (10) arranged in the breathing path (15) and configured to provide a liquid impermeable but gas permeable barrier between the housing (2) and the environment (5); and
- a valve element (40);
wherein the valve element (40) is configured to allow fluid to bypass the breathing element (10) for exhausting the pneumatic device (1) to the environment (5).

2. The pneumatic device (1) according to claim 1, wherein the valve element (40) is a one-way valve.

3. The pneumatic device (1) according to any one of the preceding claims, wherein the valve element (40) comprises at least one flapper (42) allowing passage of fluid from inside the housing (2) towards the environment (5) for bypassing the breathing element (10).

4. The pneumatic device (1) according to claim 3, wherein the flapper (42) is at least partially movable between an open position, to thereby allowing fluid to bypass the breathing element (10), and a closed position, to thereby preventing fluid to bypass the breathing element (10).

5. The pneumatic device (1) according to claim 3 and 4, wherein the flapper (42) is a lip circumferential to a valve body (41) of the valve element (40), and wherein the lip (42) seals, in the closed position, against an inner circumferential surface of the housing (2) of the pneumatic device (1).

6. The pneumatic device (1) according to any one of the preceding claims, wherein the valve element (40) is configured to carry the breathing element (10).

7. The pneumatic device (1) according to any one of the preceding claims, wherein the valve element (40) comprises a passthrough (44) through which the breathing path (15) at least partly passes.

8. The pneumatic device (1) according to claim 7, wherein the breathing element (10) intersects the breathing path (15), which passes through the passthrough (44).

9. The pneumatic device (1) according to claim 7 or 8, wherein the breathing element (10) is arranged in the passthrough (44).

10. The pneumatic device (1) according to any one of the preceding claims, wherein the valve element (40) is clamped between a support member (55) and a cover plate (53).

11. The pneumatic device (1) according to any one of the preceding claims, wherein the breathing element (10) is a membrane.

12. A brake system (100) comprising a pneumatic device (1) according to any one of claims 1 to 11.

13. A commercial vehicle (200) comprising a brake system (100) according to claim 12.

14. A method for assembling a pneumatic device (1), preferably a pneumatic device (1) according to any one of the claims 1 to 11, the method comprising the steps:
- providing a housing (2) for receiving electric or electronic components,
- providing a breathing path (15) for fluid connection between the housing (2) and the environment (5),
- providing a breathing element (10) configured to provide a liquid impermeable but gas permeable barrier,
- providing a valve element (40),
- arranging the breathing element (10) in the breathing path (15),
- arranging the valve element (40) at a position associated with the breathing path (15), such that the valve element (40) allows fluid to bypass the breathing element (10).

15. The method according to claim 14, further comprising the steps:
- pre-assembling the breathing element (10) and the valve element (40), such that the breathing element (10) is arranged in a passthrough (44) of the valve element (40),
- arranging the pre-assembled valve element (40) and breathing element (10) at a position associated with the breathing path (15), such that the breathing path (15) passes through the passthrough (44) of the valve element (40).

## Patentansprüche

1. Pneumatische Vorrichtung (1) für ein Bremssystem (100), umfassend:
- ein Gehäuse (2) zum Aufnehmen von elektronischen Komponenten und das konfiguriert ist, um während eines Betriebs der pneumatischen Vorrichtung (1) in Fluidverbindung mit der Umgebung (5) zu stehen;
- einen Atmungspfad (15), der eine Öffnung (17) aufweist und in Fluidverbindung mit dem Gehäuse (2) und der Umgebung (5) steht;
- ein Atmungselement (10), das in dem Atmungspfad (15) angeordnet und konfiguriert ist, um eine flüssigkeitsundurchlässige, aber gasdurchlässige Barriere zwischen dem Gehäuse (2) und der Umgebung (5) bereitzustellen; und
- ein Ventilelement (40);
wobei das Ventilelement (40) konfiguriert ist, um zu ermöglichen, dass Fluid das Atmungselement (10) umgeht, zum Abgeben der pneumatischen Vorrichtung (1) an die Umgebung (5).

2. Pneumatische Vorrichtung (1) nach Anspruch 1, wobei das Ventilelement (40) ein Einwegventil ist.

3. Pneumatische Vorrichtung (1) nach einem der vorstehenden Ansprüche, wobei das Ventilelement (40) mindestens eine Klappe (42) umfasst, die einen Durchgang von Fluid aus dem Inneren des Gehäuses (2) in die Umgebung (5) zum Umgehen des Atmungselements (10) ermöglicht.

4. Pneumatische Vorrichtung (1) nach Anspruch 3, wobei die Klappe (42) mindestens teilweise zwischen einer offenen Position, um dadurch einem Fluid zu ermöglichen, das Atmungselement (10) zu umgehen, und einer geschlossenen Position, um dadurch zu verhindern, dass Fluid das Atmungselement (10) umgeht, beweglich ist.

5. Pneumatische Vorrichtung (1) nach Anspruch 3 und 4, wobei die Klappe (42) eine um einen Ventilkörper (41) des Ventilelements (40) umlaufende Lippe ist, und wobei die Lippe (42) in der geschlossenen Position gegen eine innere umlaufende Oberfläche des Gehäuses (2) der pneumatischen Vorrichtung (1) abdichtet.

6. Pneumatische Vorrichtung (1) nach einem der vorstehenden Ansprüche, wobei das Ventilelement (40) konfiguriert ist, um das Atmungselement (10) zu tragen.

7. Pneumatische Vorrichtung (1) nach einem der vorstehenden Ansprüche, wobei das Ventilelement (40) eine Durchleitung (44) umfasst, durch die der Atmungspfad (15) mindestens teilweise verläuft.

8. Pneumatische Vorrichtung (1) nach Anspruch 7, wobei das Atmungselement (10) den Atmungspfad (15) kreuzt, der durch die Durchleitung (44) verläuft.

9. Pneumatische Vorrichtung (1) nach Anspruch 7 oder 8, wobei das Atmungselement (10) in der Durchleitung (44) angeordnet ist.

10. Pneumatische Vorrichtung (1) nach einem der vorstehenden Ansprüche, wobei das Ventilelement (40) zwischen einem Stützbauteil (55) und einer Abdeckplatte (53) eingeklemmt ist.

11. Pneumatische Vorrichtung (1) nach einem der vorstehenden Ansprüche, wobei das Atmungselement (10) eine Membran ist.

12. Bremssystem (100), umfassend eine pneumatische Vorrichtung (1) nach einem der Ansprüche 1 bis 11.

13. Nutzfahrzeug (200), umfassend ein Bremssystem (100) nach Anspruch 12.

14. Verfahren zum Montieren einer pneumatischen Vorrichtung (1), insbesondere einer pneumatischen Vorrichtung (1) nach einem der Ansprüche 1 bis 11, das Verfahren umfassend die Schritte:
- Bereitstellen eines Gehäuses (2) zum Aufnehmen von elektrischen oder elektronischen Komponenten,
- Bereitstellen eines Atempfads (15) für die Fluidverbindung zwischen dem Gehäuse (2) und der Umgebung (5),
- Bereitstellen eines Atmungselements (10), das konfiguriert ist, um eine flüssigkeitsundurchlässige, aber gasdurchlässige Barriere bereitzustellen,
- Bereitstellen eines Ventilelements (40),
- Anordnen des Atmungselements (10) in dem Atmungspfad (15),
- Anordnen des Ventilelements (40) an einer Position, die dem Atmungspfad (15) zugehörig ist, derart, dass das Ventilelement (40) ermöglicht, dass Fluid das Atmungselement (10) umgeht.

15. Verfahren nach Anspruch 14, ferner umfassend die Schritte:
- Vormontieren des Atmungselements (10) und des Ventilelements (40), derart, dass das Atmungselement (10) in einer Durchleitung (44) des Ventilelements (40) angeordnet ist,
- Anordnen des vormontierten Ventilelements (40) und des Atmungselements (10) an einer Position, die dem Atmungspfad (15) zugehörig ist, derart, dass der Atmungspfad (15) durch die Durchleitung (44) des Ventilelements (40) verläuft.

## Revendications

1. Dispositif pneumatique (1) pour un système de freinage (100), comprenant :
- un boîtier (2) destiné à recevoir des composants électroniques et conçu pour être en communication fluidique avec l'environnement (5) pendant le fonctionnement du dispositif pneumatique (1) ;
- une voie de dégazage (15) ayant un orifice (17) et en liaison fluidique avec le boîtier (2) et l'environnement (5) ;
- un élément de dégazage (10) agencé dans la voie de dégazage (15) et conçu pour fournir une barrière imperméable aux liquides mais perméable aux gaz entre le boîtier (2) et l'environnement (5) ; et
- un élément de soupape (40) ;
dans lequel l'élément de soupape (40) est conçu pour permettre au fluide de contourner l'élément de dégazage (10) afin de s'échapper du dispositif pneumatique (1) vers l'environnement (5).

2. Dispositif pneumatique (1) selon la revendication 1, dans lequel l'élément de soupape (40) est une soupape unidirectionnelle.

3. Dispositif pneumatique (1) selon l'une quelconque des revendications précédentes, dans lequel l'élément de soupape (40) comprend au moins un clapet (42) permettant le passage du fluide à partir de l'intérieur du boîtier (2) vers l'environnement (5) afin de contourner l'élément de dégazage (10).

4. Dispositif pneumatique (1) selon la revendication 3, dans lequel le clapet (42) est au moins partiellement mobile entre une position ouverte, afin de permettre ainsi au fluide de contourner l'élément de dégazage (10), et une position fermée, afin d'empêcher ainsi le fluide de contourner l'élément de dégazage (10).

5. Dispositif pneumatique (1) selon la revendication 3 et 4, dans lequel le clapet (42) est une lèvre circonférentielle à un corps de soupape (41) de l'élément de soupape (40) et dans lequel la lèvre (42) se place de manière hermétique, en position fermée, contre une surface circonférentielle intérieure du boîtier (2) du dispositif pneumatique (1).

6. Dispositif pneumatique (1) selon l'une quelconque des revendications précédentes, dans lequel l'élément de soupape (40) est conçu pour porter l'élément de dégazage (10).

7. Dispositif pneumatique (1) selon l'une quelconque des revendications précédentes, dans lequel l'élément de soupape (40) comprend un passage (44) à travers lequel passe au moins partiellement la voie de dégazage (15).

8. Dispositif pneumatique (1) selon la revendication 7, dans lequel l'élément de dégazage (10) croise la voie de dégazage (15), qui passe à travers le passage (44).

9. Dispositif pneumatique (1) selon la revendication 7 ou 8, dans lequel l'élément de dégazage (10) est agencé dans le passage (44).

10. Dispositif pneumatique (1) selon l'une quelconque des revendications précédentes, dans lequel l'élément de soupape (40) est serré entre un élément support (55) et une plaque de recouvrement (53).

11. Dispositif pneumatique (1) selon l'une quelconque des revendications précédentes, dans lequel l'élément de dégazage (10) est une membrane.

12. Système de freinage (100) comprenant un dispositif pneumatique (1) selon l'une quelconque des revendications 1 à 11.

13. Véhicule utilitaire (200) comprenant un système de freinage (100) selon la revendication 12.

14. Procédé d'assemblage d'un dispositif pneumatique (1), en particulier un dispositif pneumatique (1) selon l'une quelconque des revendications 1 à 11, le procédé comprenant les étapes consistant à :
- fournir un boîtier (2) destiné à recevoir des composants électriques ou électroniques,
- fournir une voie de dégazage (15) pour une connexion fluidique entre le boîtier (2) et l'environnement (5),
- fournir un élément de dégazage (10) conçu pour fournir une barrière imperméable aux liquides mais perméable aux gaz,
- fournir un élément de soupape (40),
- agencer l'élément de dégazage (10) dans la voie de dégazage (15),
- agencer l'élément de soupape (40) dans une position associée à la voie de dégazage (15), de telle sorte que l'élément de soupape (40) permet au fluide de contourner l'élément de dégazage (10).

15. Procédé selon la revendication 14, comprenant en outre les étapes consistant à :
- préassembler l'élément de dégazage (10) et l'élément de soupape (40), de telle sorte que l'élément de dégazage (10) est agencé dans un passage (44) de l'élément de soupape (40),
- agencer l'élément de soupape (40) et l'élément de dégazage (10) préassemblés dans une position associée à la voie de dégazage (15), de telle sorte que la voie de dégazage (15) passe à travers le passage (44) de l'élément de soupape (40).
